# EUROPEAN PATENT SPECIFICATION

(11) **EP 2 621 202 B1**
(45) Date of publication and mention of the grant of the patent: **30.11.2016**
(21) Application number: 12360005.8
(22) Date of filing: 27.01.2012
(51) Int. Cl.: H04W 8/22, H04W 12/12, H04W 4/02

(54) **Mobile communication device tracing**
Verfolgung einer mobilen Kommunikationsvorrichtung
Suivi de dispositif de communication mobile

(43) Date of publication of application: 31.07.2013
(73) Proprietor: ALCATEL LUCENT, 92100 Boulogne-Billancourt (FR)
(72) Inventor: Ashraf, Imran, Swindon, Wiltshire SN5 5AA (GB); Samuel, Isaac, Swindon, Wiltshire SN5 5SH (GB)
(74) Representative: Berthier, Karine

(56) References cited:
- WO-A1-2010/097691
- US-A1- 2007 072 620
- US-A1- 2011 047 033
- US-A1- 2011 077 021

## Description

### FIELD OF THE INVENTION

The present invention relates to a method of tracing a mobile wireless communication device geographic location in a wireless telecommunications network, a computer program product and a mobile device tracing unit operable to perform that method, and a method of notifying a mobile wireless communication device tracing unit of a mobile wireless communication device geographic location in a wireless telecommunications network, a computer program product and a mobile communication device operable to perform that method.

### BACKGROUND

Wireless telecommunications systems are known. In such systems, mobile communication devices (for example, mobile telephones, user equipment and network connectible devices such as iPads or other network connectible tablet devices) are operable to communicate with base stations provided by network providers.

In known wireless telecommunications systems, radio coverage is provided to network connectible devices according to areas known as cells. A base station is located in each cell to provide radio coverage. Typically, user devices in each cell are operable to receive information and data from a base station and to transmit information and data to a base station.

Typically, lost or stolen network connectible devices, such as mobile telephones, iPads and similar tables, may be located if the telecommunications system can provide a data service. Furthermore, location of lost or stolen devices may occur whilst the device is being operated with a SIM card in place.

WO 2010/097691 describes apparatus for providing device recovery assistance. The apparatus comprises memory and a processor. Those components are configured to cause the apparatus to register a device with a service. The device receives a verification procedure from a platform associated with the service, that verification procedure defining device recovery parameters associated with maintenance of a "loss status" indicator indicating a loss status of the device, causing a device identifier associated with the device to be stored in a permanent storage medium of the device, and enabling device location reporting based on the received verification procedure in response to a determination that the device is classified as lost or stolen It is desired to provide an improved technique for locating lost, missing or stolen network connectable devices in a wireless telecommunications network.

### SUMMARY

A method of notifying a mobile wireless communication device tracing unit of a mobile wireless communication device geographic location in a wireless telecommunications network, said method comprising:
assessing whether predetermined trace trigger criteria have been met;
and, if so, determining a geographic location of said mobile wireless communication device;
encoding said indication of determined geographic location as a decimal indication of latitude and longitude;
establishing a communication link with said tracing unit; and transmitting said decimal indication of determined geographic location using dual tone multi-frequency signalling techniques of said determined geographic location to said mobile device tracing unit.

Wireless telecommunications systems are known. In a cellular system, radio coverage is provided to communication devices; for example, mobile telephones and other user equipment, in areas known as cells. A base station is located in each cell to provide radio coverage. User equipment and wireless communication devices such as smartphones and tablets in each cell typically receive information and data from a base station and transmit information and data to a base station.

The widespread popularity of smartphones and tablets has caused a significant change to communication devices operating in telecommunications networks. It may be beneficial to be able to locate a lost, missing or stolen mobile, smartphone or tablet since they are typically expensive, contain large amounts of personal data and there may be a need for users to locate those devices if they cannot be found. It is known to locate such devices in various manners. In particular, some arrangements are known to operate if the communication device has data coverage and a SIM card in place, and to provide a user with an indication of their location.

The first aspect recognises that it is possible to ensure devices such as smartphones or tablets are internally enabled to perform steps which may assist a trace unit to trace that device. It will be appreciated that devices may be operable to perform a number of emergency mode procedures, in response to determining that one of a set of predetermined trace trigger criteria have been met. Those emergency mode procedures may, for example, be triggered by the initiation of an unauthorised user taking steps to deliberately switch off a device or remove the SIM card from a device. Furthermore, the emergency procedures may, for example, be triggered by the device battery charge status reaching a particularly low level.

In one embodiment, the predetermined trace trigger criteria comprises: reception of a request, from the wireless communication device tracing unit, for an indication of geographic location of the communication device. Accordingly, a device may only return an indication of location to a central device tracing unit when requested to do so by such a unit.

In one embodiment, the predetermined trace trigger criteria comprises: determining whether available battery power at the mobile communication device has passed a predetermined threshold indicative of likely battery power failure. Accordingly, before a device loses the ability to transmit anything at all to a network, it is operable to indicate to a trace unit its location. It will be appreciated that according to embodiments, different threshold battery power levels may be implemented. If the device determines that its remaining battery power is less than a predetermined threshold, it may be operable to take steps to transmit and send an indication of its location to a central database or website. That indication of location may be transmitted via normal data packet transmissions or via a DTMF transmission if out of range of an operator providing a packet data transmission link.

In one embodiment, the predetermined trace trigger comprises: determining, on power up, whether, on power down, available battery power at the mobile communication device passed a predetermined threshold indicative of likely battery power failure. Accordingly, if the mobile device sent an indication to a trace unit, it can send its location again on power up or recharge, in case, for example, it was in a vehicle and the location has changed after the power supply ran out. In some embodiments, the predetermined trace trigger may comprise power up or recharging of a battery.

In one embodiment, the predetermined trace trigger criteria comprises: determining whether an unauthorised power off procedure has been initiated. Accordingly, such an action may be indicative that a device is being held by a user other than an authorised user and that an indication of location sent to a central trace unit may be useful to an authorised end user to trace the location of the device.

In one embodiment, the predetermined trace trigger comprises: determining whether an unauthorised SIM removal procedure has been initiated. Accordingly, such an action may be indicative that a device is being held by a user other than an authorised user and that an indication of location sent to a central trace unit may be useful to an authorised end user to trace the location of the device.

In one embodiment, authorised SIM removal or power off procedures require input of a user identity code to the mobile wireless communication device. It will be appreciated that since many smartphones and tablets no longer have removable batteries, power off procedures must be implemented at the device by interacting with the device. Similarly, it can be possible for a SIM card to be removed only by an authorised user. Authorisation of such acts may be implemented by requiring an internal change to internal device procedures, such that a PIN code is required to successfully complete those acts. Any suitable user authentication mode may be chosen, for example, finger print authentication or recognition or similar.

In one embodiment, the method further comprises awaiting a preset time period, then retransmitting the indication of the determined geographic location to the mobile device tracing unit. According to some embodiments, the indication of device location may be repeatedly sent over a predetermined time interval. That time interval may be set by the internal application running on the device, or may be configurable by appropriate signalling to the device by the central trace unit. Repetition of transmission may further increase the likelihood of successful receipt of an indication of device location by a central trace unit.

The method further comprises encoding the indication of determined geographic location as a decimal indication of latitude and longitude and transmitting the decimal indication using dual tone multi-frequency signalling techniques. It will be appreciated that use of DTMF messages rather than a data message requiring a data link or packet data link with a network may ensure that a device is more likely to be able to communicate its location to a centralised communication hub. According to some embodiments, the indication of location may be sent in decimal through dual tone multi frequency (DTMF) signalling using, for example, # for a (-) and * for a decimal point. Use of such signalling may, in some embodiments, negate the need to have a data suitable connection between a device and a network, thus increasing the likelihood that an indication of location can be successfully sent by a device to a central trace unit.

In one embodiment, the method further comprises preventing initiation of a power off procedure in the event that predetermined trace trigger criteria have been met. Accordingly, the chance that a device is able to indicate to a trace unit its location is increased.

In one embodiment, the step of establishing a communication link with the mobile device tracing unit comprises initiating a call to a predetermined number to initiate the transmission of the indication of the determined geographic location. Accordingly, a device may be hard-coded to provide an indication of location to a specific trace unit, thus negating the need for an end user to install and configure a specific trace application.

A second aspect provides a computer program product operable, when executed on a computer, to perform the method of the first aspect.

A third aspect provides a mobile wireless communication device operable to notify a mobile wireless communication device tracing unit of its geographic location in a wireless telecommunications network, said mobile wireless communication device comprising:
assessment logic operable to assess whether predetermined trace trigger criteria have been met;
location determining logic operable to determine a geographic location of said mobile wireless communication device if said predetermined trace trigger criteria have been met;
encoding logic operable to encode said indication of determined geographic location as a decimal indication of latitude and longitude, and;
communication logic operable to establish a communication link with said tracing unit; and transmit an indication of said determined geographic location to said mobile device tracing unit, using dual tone multi-frequency signalling techniques.

In one embodiment, the predetermined trace trigger criteria comprises: reception of a request, from the wireless communication device tracing unit, for an indication of geographic location of the communication device.

In one embodiment, the assessment logic is operable to assess whether available battery power at the mobile communication device has passed a predetermined threshold indicative of likely battery power failure.

In one embodiment, the assessment logic is operable to assess whether an unauthorised power off procedure has been initiated.

In one embodiment, the assessment logic is operable to assess whether an unauthorised SIM removal procedure has been initiated.

In one embodiment, authorised SIM removal or power off procedures require input of a user identity code to the mobile wireless communication device.

In one embodiment, the unit further comprises repetition transmission logic operable to await a preset time period, then retransmit the indication of the determined geographic location to the mobile device tracing unit.

In one embodiment, the unit comprises power off prevention logic operable to prevent initiation of a power off procedure in the event that predetermined trace trigger criteria have been met.

In one embodiment, the communication logic is operable to initiate a call to a predetermined number to initiate the transmission of the indication of the determined geographic location.

Features described in relation to one aspect may be incorporated into other aspects described herein as appropriate.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments will now be described further with reference to the accompanying drawings, in which:
Figure 1 is a flowchart illustrating schematically a method of identifying a location of a wireless communication device according to one embodiment;
Figures 2 to 5 are flowcharts illustrating schematically methods according to embodiments.

### DESCRIPTION OF THE EMBODIMENTS

Wireless telecommunications systems are known. In a cellular system, radio coverage is provided to communication devices; for example, mobile telephones and other user equipment, in areas known as cells. A base station is located in each cell to provide radio coverage. User equipment and wireless communication devices such as smartphones and tablets in each cell typically receive information and data from a base station and transmit information and data to a base station.

The widespread popularity of smartphones and tablets has caused a significant change to communication devices operating in telecommunications networks. It may be beneficial to be able to locate a lost, missing or stolen mobile, smartphone or tablet since they are typically expensive, contain large amounts of personal data and there may be a need for users to locate those devices if they cannot be found. It is known to locate such devices in various manners. In particular, some arrangements are known to operate if the communication device has data coverage and a SIM card in place, and to provide a user with an indication of their location.

According to some such known arrangements, tracing or location programs or applications are downloadable onto a communication device and operate to constantly run in the background, periodically providing an indication of device location, and thus a means to access the location of a communication device. Such applications may be easily detected or disabled which, in the case of a stolen device, may prevent such applications from sending an indication of location of the device.

Such methods tend to operate according to mobile initiated location uploads. That is to say, a communication device is configured by the application to upload an indication of its location to a website which enables an end user to view GPS coordinates of the phone on a suitable map; for example, Google Maps. Such applications typically operate according to the following general sequence of steps: Initially, an end user downloads a suitable application to the communication device (for example, mobile phone or tablet). That application is enabled and linked to a web hosted map application; for example, Google Maps or similar. The application determines a location update interval and operation of the application is then locked, such that the location update interval cannot be altered by anyone other than an authorised end user. The application thus continues to operate in the background whilst the device is in normal operation. As a result, the communication device is operable to periodically send, in accordance with the parameters of the application, its location coordinates to a location server. The location coordinates are typically held at, and sent to, a website or other database associated with the vendor or originator of the location update application. If an end user is interested in locating a device having installed and enabled such a location update application, the end user logs in to the database or website operated by the application supplier and can view the last reported location update sent by the communication device.

It is known to add other steps to such a basic sequence; for example, some applications may have the ability to enable the pushing of a message to the device screen to provide an audible alarm at the communication device, to lock the communication device or to wipe the contents of the communication device. However, all such solutions are based upon an end user initially loading and enabling a suitable location update application onto the communication device, and also that the application provided on the device runs in the background sending location information whilst operable to upload that data to a database or website provided by the application supplier.

Other implementations are known in which a list of stolen or missing mobiles can be collated and placed on a blacklist. That blacklist may be shared between network operators. The operation of such a blacklist depends upon stolen devices being associated with a unique identifier; for example, an IMSI or TIMSI associated with a SIM, and that unique identifier for a particular device can be used to implement a triangulation method based on the location of base stations determined to surround an identified device to calculate an approximate position of that device.

Such solutions, both blacklist and device application initiated by an end user require a communication link to be maintained between a device and network. If a SIM card in a mobile device is removed prior to taking steps to identify the possible geographic location of a device, the methods may fail. As a result, a knowledgeable thief may steal a device, switch that device off and remove a SIM card to prevent the device from being successfully tracked.

Furthermore, there is a lack of communication between international device operators and network operators and as a result their device equipment identity registers (EIR), where the IMEI of a phone is kept by an operator. Such lack of collaboration can mean that even though one operator can blacklist a device based on its IMEI, such a device may still be useable in another country or within the same country if national operators do not operate according to an up to date equipment identity register.

It will be appreciated that even if a device is blacklisted and is effectively useless for communication with a telecommunications network, a thief may use such a device for its remaining facilities over, for example, WiFi and thus still initiate voice over IP calls using Skype, or use other available features such as built-in games and popular apps.
It will be appreciated that there can be ways to trace a device if it is using a WiFi link. However, if WiFi connectivity is turned off tracing the location of a device may simply be impossible.

Embodiments described herein aim to provide a method to trace a device even when a SIM card is removed.

Before describing particular embodiments, a general overview will be provided. Aspects provide a wireless network initiated method operable to track a stolen smart device, even if its SIM card is removed, provided sufficient battery charge is available at the device.

According to some embodiments, devices may be operable to require the input of a private Personal Identification Number (PIN) in order to allow the device to be switched off. It will be appreciated that many smart devices no longer have removable batteries and thus that devices may typically only be powered down by initiating a power down procedure on the device itself, rather than removing a battery.

According to some embodiments, if a smart device is stolen or lost, a user may take steps to notify a centralised database or tracing unit. Such a trace unit or database may be connectable to all device network operators which have volunteered or subscribed to be part of such a system. If a device is reported stolen, the centralised database may operate in conjunction with those network operators which are part of the system, to page the device through all available network operators. If the device responds, the centralised communication database unit is operable to initialise the sending of a message by the device through subscribing network operators, back to the trace unit, that message including an indication of device location coordinates obtained using a device built-in global positioning system.

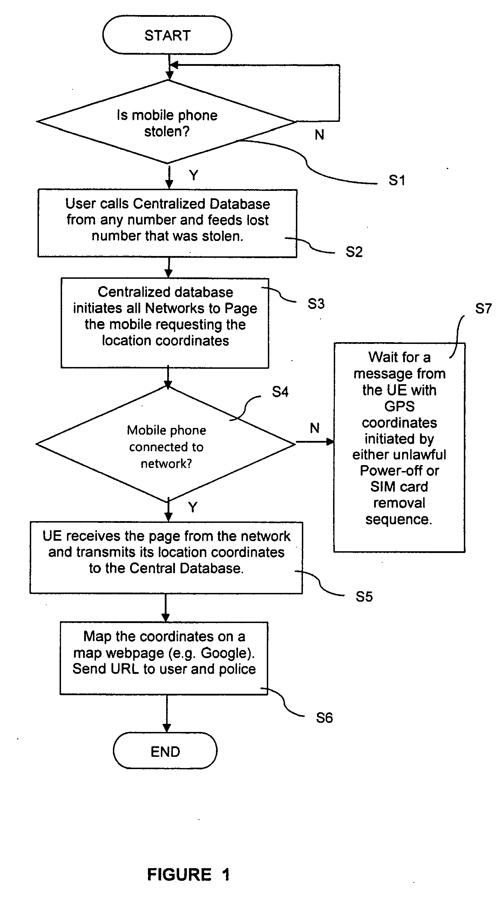

One embodiment of a trace method is illustrated schematically as a flowchart in Figure 1. In particular, an end user may take steps, shown as step S1 in Figure 1, if a device is lost or stolen. If the device is stolen, an end user may call a centralised database, or trace unit, from any phone or by using the Internet, to identify a device of interest which has been stolen, misplaced or lost to that centralised database. That step is indicated in Figure 1 as step S2.

Once the centralised trace unit becomes aware, at step S3, that the device has been reported as being of interest, the trace unit is operable to initiate action by wireless telecommunication network providers and to initialise the paging, by those network providers, of the device of interest. If a paging request is responded to, the network operators in conjunction with the trace unit control unit are operable to transmit a message requesting that the device of interest takes steps to upload its current location coordinates.

If it is determined that the device is connected to a network (step S4 in Figure 1), the user equipment or other device then receives the paging message from a network provider and is operable to transmit its location coordinates to the centralised database. Once those location coordinates are transmitted (step S5) and have been received at the centralised database, those coordinates may be appropriately mapped using a web mapping service application, for example, and sent to an end user (step S6), for example by transmitting an appropriate URL.

If it is determined at step S4 that the device is not connected to a network (that is to say, there is no response to a paging message), the centralised database may simply wait for a message from a mobile communication device such as a smartphone, mobile or wireless telecommunication network connectable tablet PC. According to some aspects and embodiments described herein, mobile communication devices may be operable to transmit location coordinates in accordance with a set of pre-set parameters if it appears that trace trigger criteria are met at the device, those trigger criteria being set to be indicative of a lost or stolen device. Examples of triggers may, for example, include determining that steps are occurring at a device which are indicative of an unlawful power off procedure or the removal of a SIM card. The step of waiting and monitoring at a trace unit for a message from a device is indicated in Figure 1 as step S7.

According to some embodiments, if a device has been stolen and a thief or other non-authorised user takes steps to remove a SIM card of that device without input of a correct identification number, the device may initialise an emergency mode and an internal application can be operable to initiate, at the device, a call to a specific number or website linked to the centralised database. That call initiated by the smart device may contain its location coordinates or an indication of its current coordinates. According to some embodiments, the indication of location may be sent in decimal through dual tone multi frequency (DTMF) signalling using, for example, # for a (-) and * for a decimal point. Use of such signalling may, in some embodiments, negate the need to have a data suitable connection between a device and a network, thus increasing the likelihood that an indication of location can be successfully sent by a device to a central trace unit.

According to some embodiments, the device may be operable to repeatedly send such an indication of its location. It will be appreciated that use of DTMF messages rather than a data message requiring a data link or packet data link with a network may ensure that a device is more likely to be able to communicate its location to a centralised communication hub. Repetition of transmission may further increase the likelihood of successful receipt of an indication of device location by a central trace unit.

According to some embodiments, the indication of device location may be repeatedly sent over a predetermined time interval. That time interval may be set by the internal application running on the device, or may be configurable by appropriate signalling to the device by the central trace unit.

According to some embodiments, if operating in an emergency mode, that is to say, if trace trigger criteria are identified by a device as having been met, a device may be operable to disable a device power-off procedure, thus preventing the switching off of the device.

It will be appreciated that according to various embodiments, the indication of location sent by a device to a centralised trace unit may be relayed to an end user or the police in various ways. For example, an end user may be notified via a website having an integrated map (for example, Google Maps or similar), thereby enabling the visual plotting of an exact location of the device.

It will be appreciated that devices may be operable to perform a number of emergency mode procedures, in response to determining that one of a set of predetermined trace trigger criteria have been met. Those emergency mode procedures may, for example, be triggered by the initiation of an unauthorised user taking steps to deliberately switch off a device or remove the SIM card from a device. Furthermore, the emergency procedures may, for example, be triggered by the device battery charge status reaching a particularly low level.

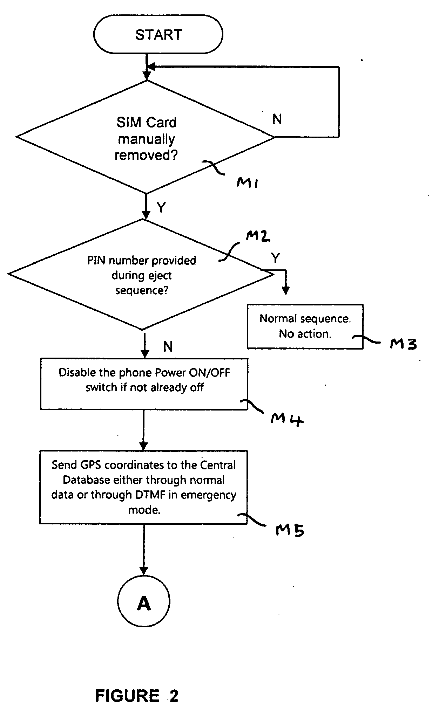

Figure 2 is a flowchart illustrating schematically a method according to one embodiment. According to the method illustrated schematically in Figure 2, a device may be operable to initiate emergency procedures on manual removal of a SIM card. According to such an emergency procedure, if the device detects, at step M1, that its SIM card has been removed, it may check at step M2 whether a PIN was provided during the SIM card eject sequence. If a PIN was provided during the eject sequence, the device may be operable to take no action, as indicated at M3. If, however, no PIN was provided during an eject sequence, the device may be operable, at step M4, to disable the device power on/off procedures and (step M5) the device may be operable to send an indication of its location to a central trace unit, for example comprising a centralised database or website. That sending of an indication of its location may occur via normal data packet transmissions or via a DTMF message encoding its GPS location which can be deciphered by the trace control unit.

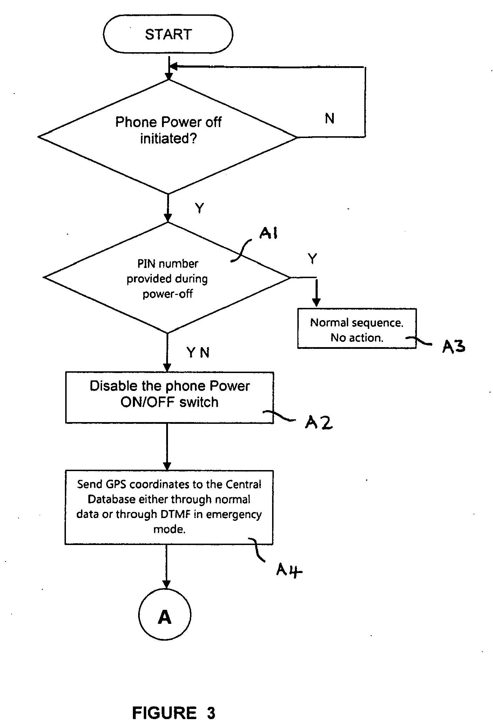

Figure 3 is a flowchart illustrating schematically a device procedure according to one embodiment. According to the emergency procedure illustrated schematically in Figure 3, if a phone power-off procedure is initiated without provision of a PIN during that power-off, as indicated at step A1, then a device may be operable to disable the phone power-off procedures as indicated at step A2. If a PIN is provided during the power-off procedure then the device may be operable to take no action and simply allow powering off of the device as indicated at step A3. If it is determined that no PIN was provided during a power-off procedure, in addition or as an alternative to the step indicated as A2 a device may be operable to send an indication of its location to a centralised database or website via normal data packet transmissions or via a DTMF transmission, as indicated at step A4.

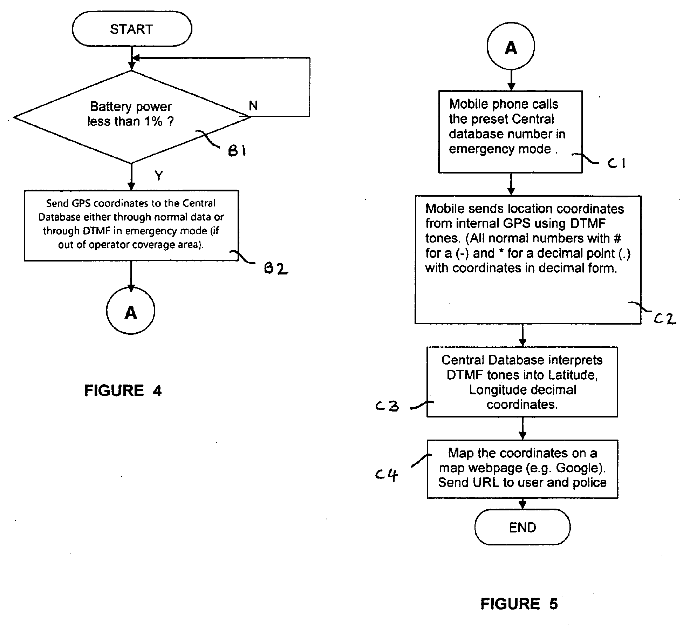

Figure 4 is a flowchart illustrating schematically the method according to one embodiment. The method illustrated in Figure 4 is implemented if a device determines at step B1 that its available remaining battery power is in the region of 1%. It will be appreciated that according to other embodiments, different threshold levels may be implemented. If the device determines at step B1 that its remaining battery power is less than a predetermined threshold, it may be operable at step B2 to take steps to transmit and send an indication of its location to a central database or website. That indication of location may be transmitted via normal data packet transmissions or via a DTMF transmission if out of range of an operator providing a packet data transmission link.

Figure 5 is a flowchart illustrating schematically a method according to one embodiment. If a device determines that criteria for implementation of an emergency mode have been met at step C1, it is operable to take steps to contact and communicate with a pre-set centralised database. A contact may occur via calling a pre-set central database telephone number. At step C2, the device is operable to determine its location using its internal global positioning system and transmit an indication of that location using DTMF tones. The coordinates may be provided and sent to the centralised database telephone number in a decimal form. At the database side, the indication sent by user equipment at step C2 may be interpreted into latitude and longitude coordinates and mapped using a suitable web based mapping application.

It will be appreciated that aspects and embodiments described herein allow a device to provide an indication of its location even when a SIM card is removed and it is no longer connected to a network. It will be appreciated that a SIM card cannot be removed without proper authorisation and, if an unauthorised user attempts to remove a SIM card, a device is operable according to some embodiments to initiate device location discovery procedures, thus preventing an unauthorised user from successfully using the device.

According to some embodiments, the device may not be switched off without proper authorisation and, if attempts are made to initialise a power-off procedure without proper authorisation, a device may be operable to initiate device location discovery procedures, thereby enabling tracking of the device.

Smart devices, including smart phones and tablets, are typically costly and the device itself often includes large quantities of private data; for example, telephone numbers and emails, photos, videos and private notes. It will be appreciated that if a handset is lost it can be replaced with a new one, but the personal data could be misused. Enabling the tracking and the discovery of the location of such a device may help to ensure that a device may be safely returned to a user.

Furthermore, it will be appreciated that embodiments and aspects described herein allow location of a device when in emergency mode and not connected to an operator network in a normal mode. That is to say, aspects provide a means to indicate a location even if no data packet connection is available.

Furthermore, methods described herein may ameliorate and prevent unauthorised removal of the SIM card and provide automated location discovery procedures if the SIM card is forcibly removed. Methods described may prevent a thief from powering off a phone or other device, thereby enabling the device to be more efficiently tracked for a longer period of time.

It will be appreciated that a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method for a mobile wireless communication device of notifying a mobile wireless communication device tracing unit of the mobile wireless communication device geographic location in a wireless telecommunications network, said method comprising:
assessing (S 1; M 1; A 1; B 1; C1)whether predetermined trace trigger criteria have been met;
and, if so, determining a geographic location of said mobile wireless communication device;
encoding said indication of determined geographic location as a decimal indication of latitude and longitude;
establishing a communication link with said tracing unit; and transmitting (S5; M5; A4; B2; C3) said decimal indication of determined geographic location using dual tone multi-frequency signalling techniques to said mobile device tracing unit.

2. A method according to claim 1, wherein said predetermined trace trigger criteria comprises: reception of a request (S3), from said wireless communication device tracing unit, for an indication of geographic location of said communication device.

3. A method according to claim 1, wherein said predetermined trace trigger criteria comprises: determining (B1) whether available battery power at said mobile communication device has passed a predetermined threshold indicative of likely battery power failure.

4. A method according to claim 1, wherein said predetermined trace trigger criteria comprises: determining whether an unauthorised power off procedure has been initiated.

5. A method according to claim 1, wherein said predetermined trace trigger comprises: determining (M1) whether an unauthorised SIM removal procedure has been initiated.

6. A method according to any one of claims 1 to 5, wherein authorised SIM removal or power off procedures require input (A1) of a user identity code to said mobile wireless communication device.

7. A method according to any one of claims 1 to 6, further comprising preventing (M4) initiation of a power off procedure in the event that predetermined trace trigger criteria have been met.

8. A mobile wireless communication device operable to notify a mobile wireless communication device tracing unit of its geographic location in a wireless telecommunications network, said mobile wireless communication device comprising:
assessment logic operable to assess (S1; M1; A1; B1; C1) whether predetermined trace trigger criteria have been met;
location determining logic operable to determine a geographic location of said mobile wireless communication device if said predetermined trace trigger criteria have been met;
encoding logic operable to encode said indication of determined geographic location as a decimal indication of latitude and longitude, and;
communication logic operable to establish a communication link with said tracing unit; and transmit (S5; M5; A4; B2; C3) said indication of said determined geographic location to said mobile device tracing unit, using dual tone multi-frequency signalling techniques.

9. A computer program product operable, when executed on a computer, to perform the method of any one of claims 1 to 7.

## Patentansprüche

1. Verfahren für eine mobile, drahtlose Kommunikationsvorrichtung zum Melden an eine Ermittlungseinheit einer mobilen, drahtlosen Kommunikationsvorrichtung der geographischen Lage der mobilen, drahtlosen Kommunikationsvorrichtung in einem drahtlosen Telekommunikationsnetzwerk, wobei das besagte Verfahren umfasst:
Bewerten (S1; M1; A1; B1; C1), ob die vorbestimmten Ermittlungsauslösekriterien erfüllt werden;
und, falls ja, Bestimmen einer geographischen Lage von besagter mobiler, drahtloser Kommunikationsvorrichtung;
Codieren besagter Angabe einer bestimmten geographischen Lage als eine dezimale Angabe von Länge und Breite;
Erstellen einer Kommunikationsverbindung mit besagter Ermittlungseinheit; und Übertragen (S5; M5; A4; B2; C3) besagter dezimaler Anzeige der bestimmten geographischen Lage unter Benutzen von Dualton-Multifrequenz-Signaltechniken auf die besagte Ermittlungseinheit der mobilen Vorrichtung.

2. Verfahren nach Anspruch 1, wobei besagte vorbestimmte Ermittlungsauslösekriterien umfassen: Empfangen einer Anforderung (S3) von der Ermittlungseinheit besagter drahtloser Kommunikationsvorrichtung für die Angabe einer geographischen Lage von besagter Kommunikationsvorrichtung.

3. Verfahren nach Anspruch 1, wobei besagte vorbestimmte Ermittlungsauslösekriterien umfassen: das Bestimmen (B1), ob der Batteriestrom besagter mobiler Kommunikationsvorrichtung einen vorbestimmten Grenzwert überschreitet, der einen wahrscheinlichen Batteriestromausfall anzeigt.

4. Verfahren nach Anspruch 1, wobei besagte vorbestimmte Ermittlungsauslösekriterien umfassen: Bestimmen, ob ein unberechtigter Ausschaltvorgang initiiert worden ist.

5. Verfahren nach Anspruch 1, wobei besagte vorbestimmte Ermittlungsauslösekriterien umfassen: Bestimmen (M1), ob ein unberechtigter SIM-Entnahmevorgang initiiert worden ist.

6. Verfahren nach einem beliebigen der Ansprüche 1 bis 5, wobei die berechtigte SIM-Entnahme- bzw. Ausschaltvorgänge die Eingabe (A1) eines Benutzeridentitätscodes für besagte mobile, drahtlose Kommunikationsvorrichtung erfordern.

7. Verfahren nach einem beliebigen der Ansprüche 1 bis 6, weiterhin umfassend das Verhindern (M4) der Initiierung eines Abschaltvorgangs, wenn die vorbestimmten Ermittlungsauslösekriterien erfüllt worden sind.

8. Mobile, drahtlose Kommunikationsvorrichtung, betreibbar zum Melden an eine Ermittlungseinheit einer mobilen, drahtlosen Kommunikationsvorrichtung ihrer geographischen Lage in einem drahtlosen Kommunikationsnetzwerk, wobei besagte mobile, drahtlose Kommunikationsvorrichtung umfasst: Bewertungslogik, betreibbar zum Bewerten (S1; M1; A1; B1; C1), ob die vorbestimmten Ermittlungsauslösekriterien erfüllt worden sind;
Lagebestimmungslogik, betreibbar zum Bestimmen einer geographischen Lage von besagter mobiler, drahtloser Kommunikationsvorrichtung, wenn besagte vorbestimmte Ermittlungsauslösekriterien erfüllt worden sind;
Codierlogik, betreibbar zum Codieren besagter Angabe einer bestimmten geographischen Lage als dezimale Angabe von Länge und Breite, und;
Kommunikationslogik, betreibbar zum Erstellen einer Kommunikationsverbindung mit besagter Ermittlungseinheit;
und Übertragen (S5; M5; A4; B2; C3) besagter Angabe besagter bestimmter geographischer Lage an die Ermittlungseinheit besagter mobiler Vorrichtung, unter Benutzen von Dualton-Multifrequenz-Signaltechniken.

9. Computerprogramm-Produkt, betreibbar, um bei dessen Ausführung auf einem Computer das Verfahren nach einem beliebigen der Ansprüche 1 bis 7 durchzuführen.

## Revendications

1. Procédé destiné à un dispositif de communication mobile sans fil pour notifier à une unité de repérage d'un dispositif de communication mobile sans fil la localisation géographique d'un dispositif de communication mobile sans fil dans un réseau de télécommunication sans fil, ledit procédé comprenant les étapes suivantes :
évaluer (S1 ; M1 ; A1 ; B1 ; C1) si des critères de déclenchement de repérage prédéterminés sont satisfaits ;
et si c'est le cas, déterminer une localisation géographique dudit dispositif de communication mobile sans fil ;
coder ladite indication de localisation géographique déterminée sous forme d'une indication décimale de latitude et de longitude ;
établir une liaison de communication avec ladite unité de repérage ; et transmettre (S5 ; M5 ; A4 ; B2 ; C3) ladite indication décimale de la localisation géographique déterminée à l'aide de techniques de signalisation multifréquence à deux tonalités à ladite unité de repérage de dispositif mobile.

2. Procédé selon la revendication 1, dans lequel lesdits critères de déclenchement de repérage prédéterminés comprennent : la réception d'une demande (S3), en provenance de ladite unité de repérage de dispositif de communication mobile sans fil, d'indication de la localisation géographique dudit dispositif de communication.

3. Procédé selon la revendication 1, dans lequel lesdits critères de déclenchement de repérage prédéterminés comprennent: la détermination (B1) de savoir si la charge de batterie disponible pour ledit dispositif de communication mobile a dépassé un seuil prédéterminé indiquant une probable coupure de l'alimentation par la batterie.

4. Procédé selon la revendication 1, dans lequel lesdits critères de déclenchement de repérage prédéterminés comprennent : la détermination de savoir si une procédure de coupure de l'alimentation non autorisée a été lancée.

5. Procédé selon la revendication 1, dans lequel lesdits critères de déclenchement de repérage prédéterminés comprennent: la détermination (M1) de savoir si une procédure de retrait de la carte SIM non autorisée a été lancée.

6. Procédé selon l'une quelconque des revendications 1 à 5, dans lequel les procédures de retrait de la carte SIM ou de coupure de l'alimentation nécessitent la saisie (A1) d'un code d'identification utilisateur sur ledit dispositif de communication mobile sans fil.

7. Procédé selon l'une quelconque des revendications 1 à 6, comprenant en outre l'interdiction (M4) du lancement d'une procédure de coupure de l'alimentation dans le cas où les critères de déclenchement de repérage prédéterminés sont satisfaits.

8. Dispositif de communication mobile sans fil permettant de notifier une unité de repérage de dispositif de communication mobile sans fil de sa localisation géographique dans un réseau de télécommunication mobile, ledit dispositif de communication mobile sans fil comprenant :
une logique d'évaluation permettant d'évaluer (S1 ; M1 ; A1 ; B1 ; C1) si les critères de déclenchement de repérage prédéterminés sont satisfaits ;
une logique de détermination de la localisation permettant de déterminer une localisation géographique dudit dispositif de communication mobile sans fil si lesdits critères de déclenchement de repérage prédéterminés sont satisfaits ;
une logique de codage permettant de coder ladite indication de localisation géographique déterminée sous forme d'une indication décimale de latitude et de longitude, et ;
une logique de communication permettant d'établir une liaison de communication avec ladite unité de repérage et transmettre (S5 ; M5 ; A4 ; B2 ; C3) ladite indication de ladite localisation géographique déterminée à ladite unité de repérage de dispositif mobile, à l'aide de techniques de signalisation multifréquence à deux tonalités.

9. Un produit-programme informatique permettant, lorsqu'il est exécuté sur un ordinateur, de réaliser les procédés de l'une quelconque des revendications 1 à 7.
